(19) **Europäisches Patentamt / European Patent Office / Office européen des brevets**

(11) **EP 1 178 334 B1**

(12) **FASCICULE DE BREVET EUROPEEN**

(45) Date de publication et mention
de la délivrance du brevet:
**13.06.2007 Bulletin 2007/24**

(51) Int Cl.:
*G01S 17/95* (2006.01)    *B64G 1/10* (2006.01)

(21) Numéro de dépôt: **01402060.6**

(22) Date de dépôt: **30.07.2001**

(54) **Constellation de mesure de vitesses de vent atmosphériques par un lidar doppler**

Satellitenkonstellation zur Messung der atmosphärischen Windgeschwindigkeit mittels Doppler Lidar

Satellite constellation for measuring atmospheric wind using doppler lidar principles

(84) Etats contractants désignés:
**AT BE CH CY DE DK ES FI FR GB GR IE IT LI LU MC NL PT SE TR**

(30) Priorité: **02.08.2000 FR 0010190**

(43) Date de publication de la demande:
**06.02.2002 Bulletin 2002/06**

(73) Titulaire: **Alcatel Lucent**
**75008 Paris (FR)**

(72) Inventeurs:
• **Krawczyk, Rodolphe,**
**Résidence du Parc Vaugrenier**
**06270 Villeneuve Loubet (FR)**
• **Plantier, Jean-Francois**
**06100 Nice (FR)**

(74) Mandataire: **Lamoureux, Bernard et al**
**Alcatel Lucent**
**Intellectual Property & Standards**
**54 rue La Boétie**
**75008 Paris (FR)**

(56) Documents cités:
**EP-A- 0 017 597        EP-A- 0 510 789**
**US-A- 4 809 935        US-A- 5 367 371**
**US-A- 5 872 621**

**Description**

L'invention concerne la mesure des vitesses de vent atmosphériques par lidar vent spatial. La vitesse de vent atmosphérique est une composante fondamentale de la météorologie opérationnelle ; elle intéresse donc directement les scientifiques et de nombreuses sociétés commerciales.

Or, l'obtention de mesures globales terrestres n'est pas compatible aujourd'hui avec les moyens sol et aéroportés existants, qui ne couvrent qu'une fraction limitée de la surface terrestre (les zones océaniques en particulier sont très mal couvertes) ; il a donc été proposé de procéder à des mesures depuis l'espace, à partir de lidars Doppler, pour obtenir un maillage de mesures suffisant pour satisfaire les besoins exprimés par les météorologues, en particulier Eumetsat et Météo-France.

Le principe du lidar (appelé aussi radar optique) est analogue à celui du radar : une onde optique émise par un transmetteur laser est rétrodiffusée par les molécules et particules de l'atmosphère vers un récepteur situé, dans le cas d'un lidar spatial, à proximité du laser émetteur ; le signal reçu est ensuite transmis à une chaîne de détection et de traitement puis envoyé au sol pour traitement éventuel complémentaire. L'échantillonnage temporel de ce signal de retour donne des informations correspondant à chaque couche atmosphérique traversée : le lidar est donc un sondeur par nature. Dans le cas du lidar Doppler, le traitement du signal consiste à retrouver, par des moyens qui dépendent du type de détection employée (directe, cohérente ou hétérodyne, etc), le décalage fréquentiel entre la longueur d'onde émise par le laser et celle du signal de retour, décalage qui donne directement la projection, sur la ligne de visée, de l'écart de vitesse entre le porteur de l'émetteur et les molécules et/ou particules ayant rétrodiffusé le signal laser ; de cet écart de vitesse, on déduit, par des algorithmes appropriés, des informations sur les composantes de la vitesse du vent dans la zone sondée : idéalement, des mesures suivant trois lignes de visée différentes en un point donné permettent de retrouver les trois composantes du vecteur vent en ce point (deux dans le plan horizontal et la troisième suivant la verticale du lieu). On peut aussi négliger la vitesse verticale du vent et se contenter de deux mesures en chaque point.

US-A-5 367 371 décrit le principe d'une mesure de vitesse atmosphérique de vent par lidar spatial, tel qu'expliqué ci-dessus. Ce document suggère de munir un satellite de deux télescopes visant à des angles de 45° par rapport à l'axe de roulis du satellite. Pour ce qui est des orbites, ce document se contente de décrire les lieux des points d'impact des rayons des deux télescopes pour une orbite donnée du satellite. Le problème de la couverture terrestre est soulevé, mais ne représente en fait qu'un souhait, sans qu'une solution réelle ne soit apportée.

US-A-5 872 621 concerne une solution au problème de la réception dans un lidar spatial; ce document propose d'utiliser un élément optique holographique pour diriger vers le récepteur du lidar le faisceau rétrodiffusé. L'élément optique holographique est entraîné en rotation pour balayer la zone à couvrir. Comme dans le document précédent, ce document n'évoque le problème de la couverture que pour montrer la cycloïde que forme le lieu des points d'impact du faisceau sur la terre, pour une trajectoire donnée du satellite.

Par ailleurs, diverses méthodes d'observations par satellites reposant sur l'effet Doppler ont été proposées. JP-A-10 19683 propose, dans une constellation d'au moins trois satellites, d'émettre depuis un satellite des impulsions laser vers un miroir des autres satellites tournant dans des directions opposées. Les impulsions sont réfléchies vers le satellite d'origine et la différence temporelle entre les impulsions est mesurée; on en déduit une mesure de vitesse de l'éther électromagnétique, US-A-4 463 357 propose de mesurer la teneur en électron de l'ionosphère entre un véhicule spatial et un récepteur, par corrélation croisée de deux signaux modulés de façon cohérente; l'utilisation d'une pluralité de stations terrestres et des satellites du système GPS permet de localiser les événements terrestres qui induisent des perturbations ionosphériques - comme les éruptions volcaniques ou les envois de missiles intercontinentaux. US-A-5 428 358 propose une mesure analogue de la teneur électronique de l'ionosphère, à partir des satellites de la constellation GPS. US-A-5 675 081 propose un système de mesure de la teneur en eau de l'atmosphère à l'aide de radiomètres à vapeur d'eau, qui utilise encore les satellites de la constellation GPS. Ces documents sont muets sur la mesure de vitesses atmosphériques de vents; ils ne mentionnent pas non plus le problème de la détermination des orbites pour de telles mesures. La mesure des vitesses atmosphériques du vent soulève donc différents problèmes. Un premier problème majeur réside dans la faiblesse des ressources (puissance électrique principalement) disponibles à bord d'un satellite, en comparaison de celles disponibles au sol, face à des exigences très sévères des scientifiques, tant au niveau de la précision de la mesure de vitesse du vent que de celui du nombre de lignes de visée demandées. Un deuxième problème est celui de la couverture géographique des mesures : un système spatial de mesures de vitesses du vent à partir de lidars montés sur une constellation de satellites sera d'autant plus intéressant qu'il assurera :

- la couverture la plus large possible de la surface terrestre ;
- le plus grand nombre de mesures par cellule élémentaire sondée, suivant des lignes de visée différentes ; cette dernière a les dimensions typiques suivantes : 200x200 km en horizontal, quelques centaines de m en vertical typiquement 500 m à 1 km).

L'invention propose une solution à ces différents problèmes. Elle assure en premier lieu une grande simplicité des satellites de mesure, avec un nombre de satellites limité. Elle permet aussi dans un mode de réalisation préféré d'assurer une bonne couverture terrestre. Dans une première configuration, les points de mesure sont répartis, sur une moitié de la surface du globe terrestre, de façon sensiblement régulière, c'est-à-dire que les lignes de visée des instruments montés sur les différents satellites se projettent au sol en des points qui, ajoutés les uns aux autres, constituent des trajectoires (appelées traces) dont les intersections avec l'équateur sont quasi équidistantes. Dans une deuxième configuration, les points de mesure sont regroupés, sur l'autre moitié de la surface du globe terrestre, par zones (de dimensions inférieures à typiquement 200x200 km), c'est-à-dire que les lignes de visée des instruments montés sur les différents satellites se projettent au sol en des points contenus dans les dites zones. Les deux configurations se produisent chacune sur une durée de 12 heures, avec une périodicité de 24 heures, tandis que les moitiés de surface de globe mentionnées varient dans le temps avec une vitesse que l'on peut choisir en ajustant l'altitude des satellites. L'invention dans ce mode de réalisation permet donc d'obtenir des mesures facilement exploitables pour des météorologues.

Plus précisément, l'invention propose une constellation de satellites pour la mesure des vitesses de vents atmosphériques, la constellation comprenant au moins deux satellites répartis sur une même orbite, chaque satellite présentant un lidar Doppler. Les satellites de la constellation présentent des angles différents entre la projection sur la surface de la Terre de la ligne de visée et la projection sur la Terre de la vitesse du satellite. Les traces sur la surface de la Terre des lignes de visées des satellites de la constellation sont sensiblement confondues dans une première zone de la surface de la Terre. Les traces sur la surface de la Terre des lignes de visées des satellites de la constellation sont aussi être sensiblement régulièrement réparties dans une deuxième zone de la surface de la Terre.

De préférence, la ligne de visée du lidar Doppler d'un satellite est fixe. Dans un mode de réalisation de l'invention, l'orbite est une orbite polaire ou quasi-polaire. Il est aussi avantageux que l'altitude orbitale soit comprise entre 350 et 500 km.

Dans un mode de réalisation, la constellation présente trois satellites, et l'altitude orbitale est comprise entre 400 et 500 km.

Il est aussi avantageux que l'angle de visée du lidar Doppler d'un satellite par rapport au nadir soit compris entre 30 et 50° et soit de préférence voisin de 45°.

Dans ce cas, la constellation peut présenter deux satellites, et la différence entre lesdits angles est alors comprise entre 75 et 105° et est de préférence voisine de 90°.

La constellation peut aussi présenter trois satellites, et dans ce cas, la différence entre lesdits angles est comprise entre 90 et 150° et est de préférence voisine de 120°.

Dans un mode de réalisation, la constellation vérifie :

$$\frac{2\pi T_s}{nT}R < \frac{H}{\cos\gamma}\left|tg\,\alpha_{i+1}\sin\varphi_{i+1} - tg\,\alpha_i\sin\varphi_i\right| + \frac{T_s}{T}R\psi_{i,i+1} \le a + \frac{2\pi T_s}{nT}R$$

où n est le nombre de satellites dans la constellation, T la période de rotation de la Terre, $T_s$ la période orbitale, R le rayon de la Terre, H l'altitude orbitale, $\gamma$ est l'angle entre la projection de la vitesse du satellite i sur la surface de la Terre lors du passage au-dessus de l'équateur et la vitesse de rotation de la Terre à l'équateur, $\alpha_i$ l'angle entre la ligne de visée pour le satellite i et le nadir, $\varphi_i$ l'angle entre la projection sur la Terre de la ligne de visée du satellite i et la projection sur la Terre de la vitesse de ce satellite, $\psi_{i,i+1}$ l'angle mesuré dans le plan de l'orbite entre les satellites i et i + 1, a est un paramètre homogène à une distance et inférieur à 500 km.

Dans ce cas, il est avantageux que le paramètre a présente une valeur inférieure à 100 km, de préférence inférieure à 50 km.

Dans un autre mode de réalisation, l'angle entre deux satellites de la constellation, dans le plan de l'orbite, vérifie:

$$\frac{T_s}{T}R\psi_{i,i+1} \le \frac{H}{\cos\gamma}\left|tg\,\alpha_i\sin\varphi_i - tg\,\alpha_{i+1}\sin\varphi_{i+1}\right| \le \frac{T_s}{T}R\psi_{i,i+1} + b$$

où T la période de rotation de la Terre, $T_s$ la période orbitale, H l'altitude orbitale, $\gamma$ est l'angle entre la projection de la vitesse du satellite i sur la surface de la Terre lors du passage au-dessus de l'équateur et la vitesse de rotation de la Terre à l'équateur, $\alpha_i$ l'angle entre la ligne de visée pour le satellite i et le nadir, $\varphi_i$ l'angle entre la projection sur la Terre de la ligne de visée du satellite i et la projection sur la Terre de la vitesse de ce satellite, $\psi_{i,i+1}$ l'angle mesuré dans le plan de l'orbite entre les satellites i et i+1, b est un paramètre homogène à une distance et inférieur à 200 km.

Dans ce cas, le paramètre b présente avantageusement une valeur inférieure à 20 km, de préférence inférieure à 10 km.

D'autres caractéristiques et avantages de l'invention apparaîtront à la lecture de la description qui suit de modes de réalisation de l'invention, donnés à titre d'exemple et en référence aux dessins annexés, qui montrent

- figure 1, une représentation schématique d'un repère utilisé pour un satellite;
- figure 2, une représentation schématique d'une constellation de satellites;
- figure 3, une représentation schématique d'une constellation de deux satellites, dans un premier mode de réalisation de l'invention;
- figure 4, une représentation schématique de l'angle de visée du premier satellite de la constellation de la figure 3;
- figure 5, une représentation schématique de l'angle de visée du deuxième satellite de la constellation de la figure 3;
- figure 6, une représentation des intersections des lignes de visée avec la surface du globe, pour la constellation de la figure 3;
- figures 7 à 9, des représentations similaires à celles des figures 4 à 6 pour une autre constellation à deux satellites suivant l'invention;
- figures 10 à 14, des représentations similaires à celles des figures 3 à 6 pour une constellation à trois satellites suivant l'invention;
- figures 15 à 18, des représentations similaires à celles des figures 11 à 14 pour une autre constellation à trois satellites suivant l'invention.

L'invention propose d'utiliser, pour la mesure des vents atmosphériques par lidar Doppler, une constellation de satellites présentant chacun une ligne de visée (ou ligne de tir), qui est de préférence fixe. Les satellites sont répartis sur une même orbite, de sorte à assurer une bonne couverture terrestre. L'invention permet ainsi de simplifier la structure du satellite, tout en préservant les résultats obtenus. Des choix possibles des positions des satellites et des angles de tir sont détaillés dans la suite de la description.

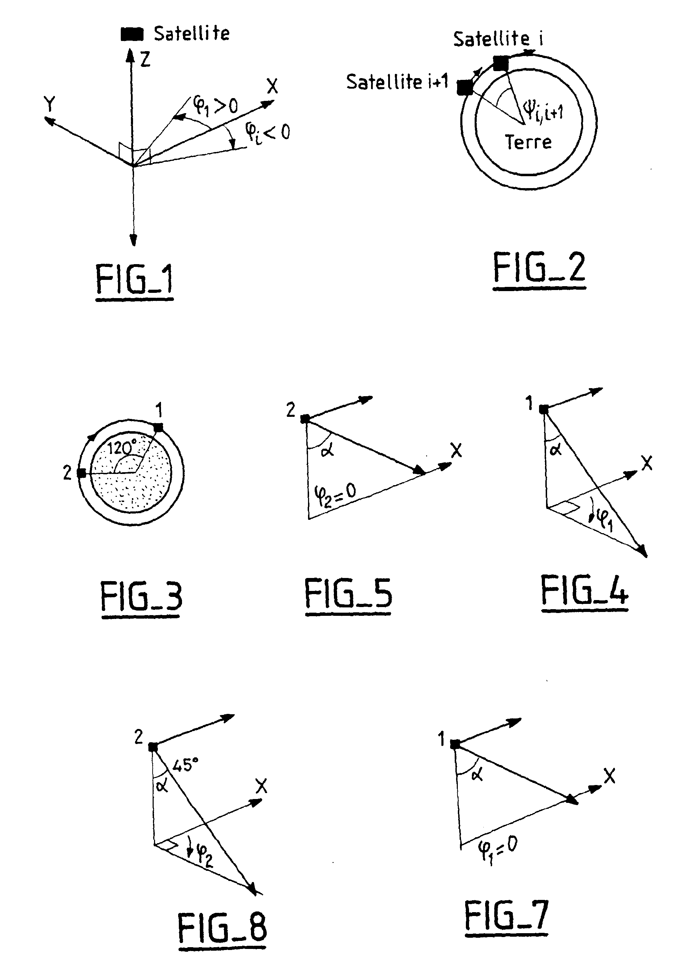

Les figures 1 et 2 montrent les conventions utilisées dans la suite pour l'explication de l'invention. La figure 1 est une représentation schématique d'un repère utilisé pour un satellite; le repère est un repère orthonormé direct. L'axe z traverse le centre de la Terre et le satellite. L'axe x est parallèle à la projection de la vitesse du satellite sur la surface de la Terre; l'axe y est perpendiculaire aux deux précédents. Pour un satellite d'ordre i, on note $\varphi_i$ l'azimut du tir laser par rapport à la projection de la vitesse du satellite projetée au sol, autrement dit l'angle entre l'axe x et la projection sur le sol de la ligne de tir; le signe de cet angle est déterminé par le sens du repère, l'angle étant positif lorsque la projection est dans le premier quadrant, entre les axes x et y, comme représenté sur la figure. On note $\alpha_i$ l'angle entre la ligne de tir et le nadir, pour le satellite i, autrement dit l'angle entre l'axe z et la ligne de tir. La figure 2 est une représentation schématique d'une constellation de deux satellites référencés i et i+1, dans le plan de l'orbite, qui dans l'exemple est une orbite polaire; par convention, le satellite i est situé en avant du satellite i+1 sur l'arc orbital, dans le sens de parcours de l'orbite. On note $\psi_{i,i+1}$ le déphasage angulaire entre deux satellites consécutifs i et i+1.

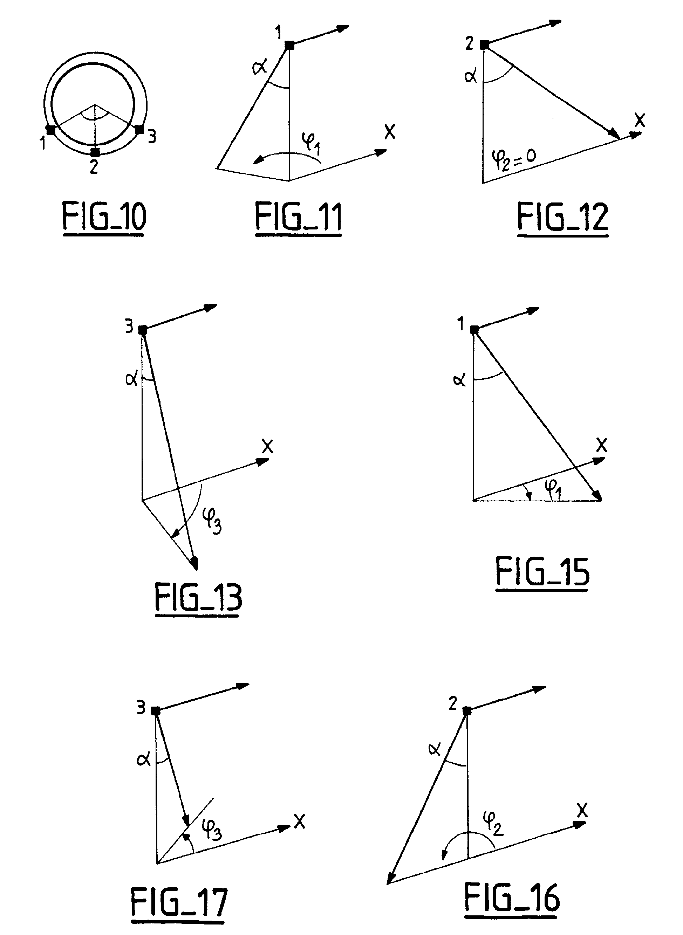

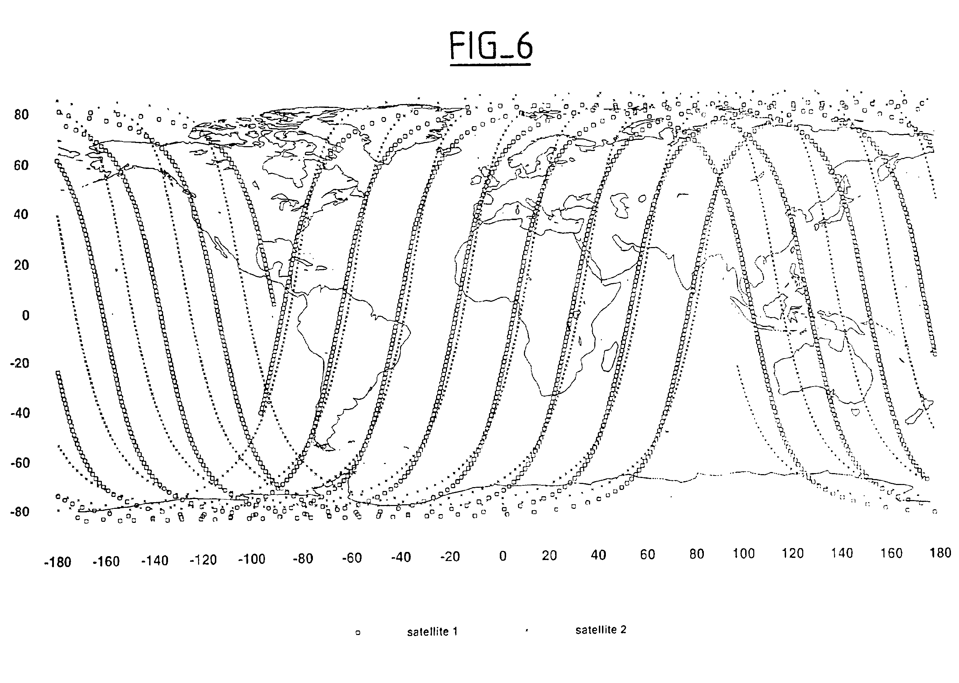

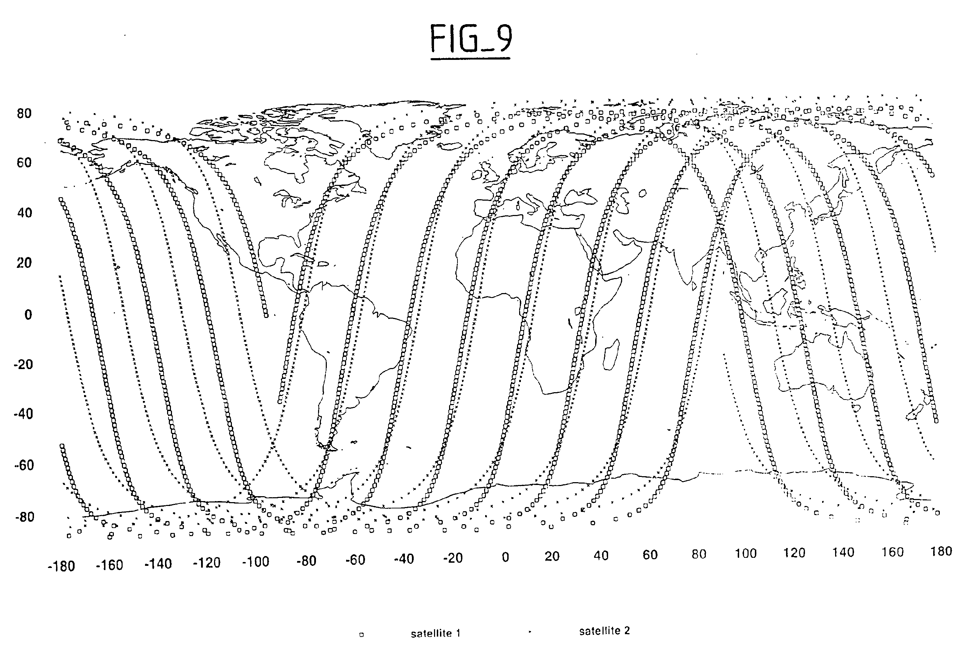

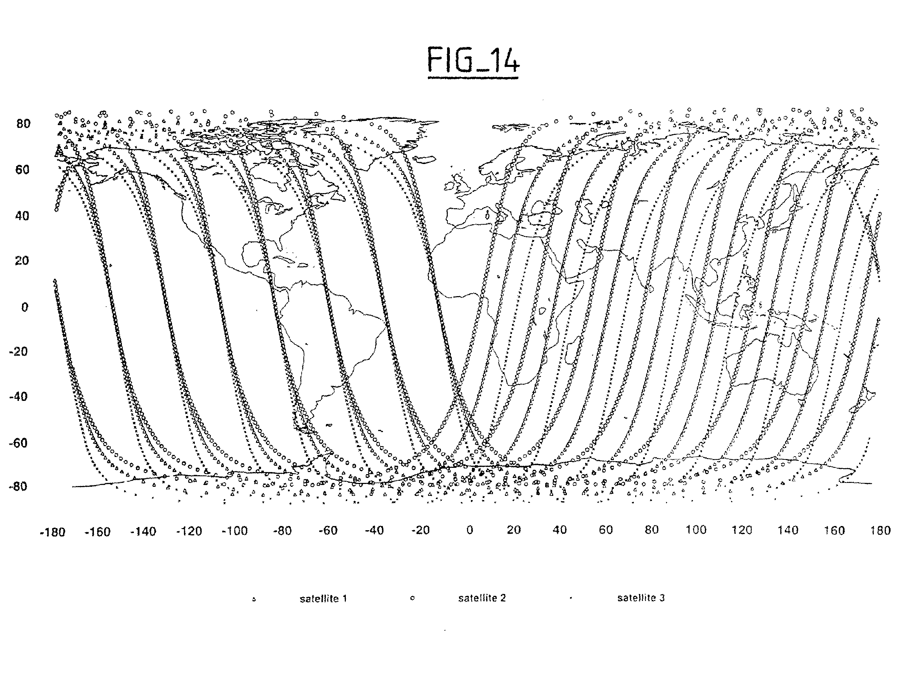

Des caractéristiques possibles d'une constellation selon l'invention sont maintenant décrites. Le nombre de satellites de la constellation est d'au moins deux; les exemples des figures 3 à 9 sont des constellations à deux satellites, qui fournissent des résultats satisfaisants, et qui permettent une mesure des vitesses des vents suivant deux composantes, typiquement des mesures des vitesses horizontales des vents. On peut aussi utiliser des constellations à trois satellites, comme dans les exemples des figures 10 à 18. Ces constellations permettent des mesures de vitesses des vents suivant trois composantes, et donc des mesures des vitesses horizontales et verticales. L'invention s'applique à une constellation réduite à deux ou trois satellites, comme dans ces exemples ; elle est facilement généralisable à n satellites (n>3), bien qu'une constellation à plus de trois satellites ne présente qu'un intérêt limité pour les raisons suivantes:

- trois mesures suivant des lignes de visée différentes suffisent pour retrouver le vecteur vent (à trois dimensions) ;
- le coût d'un système à n>3 satellites risquerait de devenir prohibitif.

L'orbite des satellites dans la constellation est avantageusement une orbite polaire ou quasi-polaire; on entend par orbite quasi-polaire une orbite dont l'inclinaison est comprise approximativement entre 80 et 100°; par exemple, une orbite héliosynchrone - qui permet au satellite de survoler la Terre dans des conditions d'éclairement semblable d'une orbite à l'autre - est quasi-polaire. Ce type d'orbite est particulièrement bien adapté à la mission décrite, dans la mesure où elle assure un bon recouvrement de l'ensemble de la surface terrestre; l'invention peut aussi s'appliquer à d'autres types d'orbite, comme les orbites très inclinées ; de telles orbites permettent de survoler les zones tropicales avec une répétitivité supérieure à celle d'une orbite polaire ou quasi-polaire, mais elles n'assurent pas ou mal la couverture des zones septentrionales

L'altitude orbitale H des satellites de la constellation est typiquement comprise entre 350 à 500 km; dans le cas d'une constellation à trois satellites, il est avantageux que l'altitude soit comprise entre 400 et 500 km. Cette plage d'altitudes permet de satisfaire deux contraintes; d'une part, la précision de la mesure de vitesse du vent par lidar dépend de l'importance du signal rétrodiffusé : les altitudes faibles, i. e. en dessous de 500 km seront donc privilégiées, puisque l'intensité du signal rétrodiffusé est inversement proportionnelle à la distance entre le transmetteur et la cible rétrodiffusante. D'autre part, plus l'altitude orbitale est faible, plus la durée de vie du satellite décroît du fait du freinage atmosphérique, à moins d'embarquer davantage d'ergols, ce qui accroît d'autant la masse et le volume du satellite. On choisit avantageusement des altitudes supérieures à 350 km.

La période orbitale $T_s$ se déduit alors de l'altitude choisie ; elle est de l'ordre de l'ordre de 90 à 100 mn pour des orbites d'altitude de 350 à 500 km, et est donnée par la formule

$$T_S \approx 2\pi\sqrt{\frac{(R+H)^3}{\mu}}$$

où $\mu$ est la constante gravitationnelle terrestre, environ $4.10^5$ km$^3$/s$^2$, R est le rayon de la Terre (environ 6400 km) et H l'altitude orbitale.

La répartition des satellites sur l'orbite est avantageusement fonction de la ligne de visée choisie pour chacun des satellites, qui est maintenant discutée. L'angle de visée du tir laser par rapport au nadir, pour un satellite, est de préférence compris entre 30 et 50°, et est typiquement voisin de 45° comme dans les exemples donnés plus bas. Cet angle, dans le repère de la figure 1 est mesuré entre l'axe z et la ligne de visée - étant entendu que le satellite vise vers la surface de la Terre. La valeur inférieure de cette plage permet de minimiser l'erreur introduite sur le calcul de la composante horizontale du vent par la vitesse verticale du vent, notamment dans le cas d'une configuration à deux satellites ; à la limite, un angle de 90° serait optimal mais le tir laser ne serait plus émis dans l'atmosphère. La valeur supérieure de la plage répond à une contrainte de minimisation de l'épaisseur atmosphérique traversée et de maximisation du signal rétrodiffusé : plus l'angle augmente, plus la quantité d'air traversée est importante, et plus le signal rétrodiffusé par les masses d'air en mouvement est faible.

Dans le mode de réalisation préféré, l'invention propose de choisir la ligne de visée de chaque satellite et la répartition des satellites de la constellation de sorte à définir deux zones sur la surface de la Terre. Dans une première zone, les traces sur la surface de la Terre des lignes de visées des satellites de la constellation sont sensiblement confondues; autrement dit, dans cette zone, un point de la surface de la Terre atteint par la ligne de visée d'un premier satellite de la constellation est atteint ensuite par la ligne de visée des autres satellites de la constellation. La précision dans ce cas est celle requise par les météorologues. Typiquement, il est intéressant pour des applications de mesure des vitesses du vent de connaître les vitesses dans des zones de 200 km sur 200 km. On considère donc dans le cadre de la présente description que les traces sont confondues ou sensiblement confondues si la distance entre les traces est inférieure à 200 km, voire inférieure à 100 km. Dans cette première zone, l'invention permet une mesure des vitesses de vent, en horizontal (dans le cas d'une constellation de deux satellites) ou en horizontal et en vertical (dans le cas de trois satellites). On peut donc déterminer la vitesse du vent en chacun des points visés.

Dans une deuxième zone, les points de mesure sont répartis de façon sensiblement régulière, autrement dit, les intersections avec la surface de la Terre des lignes de visée des différents satellites de la constellation constituent des trajectoires ou traces. Les intersections de ces traces avec l'équateur sont quasi équidistantes. Dans cette zone, on obtient donc une information à une dimension sur le vent-projection du vent suivant la ligne de visée pour chaque mesure, en autant d'endroits de la Terre que de points de mesure ; comme le montrent les figures, on obtient dans cette zone des points de mesure plus nombreux que dans la première zone.

Les deux zones correspondent avantageusement chacune sensiblement à la moitié de la surface de la Terre. En outre, l'optimisation des caractéristiques orbitales permet d'assurer que :

• ces deux configurations se produisent chacune sur une durée de 12 heures, avec une périodicité de 24 heures ;
• que les zones mentionnées varient dans le temps avec une vitesse que l'on peut choisir en ajustant l'altitude des satellites.

On peut donc en 24 heures, disposer pour un point de la surface de la Terre, d'une part d'une mesure de la vitesse du vent, avec deux ou trois composantes, et d'autre part d'une mesure de la vitesse du vent, suivant une seule direction. L'invention se prête bien aux applications météorologiques, avec par période de 24 heures une mesure et une mise à jour ou confirmation de la mesure. On trouve, comme le montrent les exemples, des zones terrestres, situées vers les latitudes de l'ordre de $\pm$ 50° (pour deux satellites) ou de $\pm$ 20° (pour deux satellites), où les lignes de visée arriveront, en 12 h, sensiblement sur les mêmes cellules, et cela sur une moitié de la surface terrestre, l'autre moitié bénéficiant d'une couverture plus homogène, où les cellules ne seront adressées que par une seule ligne de visée.

L'invention présente l'avantage unique de combiner, avec la même constellation de satellites, des mesures réparties de façon sensiblement régulière sur la surface du globe terrestre, et des mesures moins uniformément réparties, mais concentrées en certaines cellules : les zones adressées par plusieurs lignes de visée sur une durée équivalente à une fraction d'orbite (typiquement quelques dizaines de mn) fournissent des mesures de vent plus directement exploitables, en réduisant le recours aux modèles d'assimilation ; en particulier, pour le cas à trois lignes de visée, on obtient dans les cellules de la première zone les trois composantes de la vitesse du vent au point de mesure. L'invention permet donc de mieux recaler les modèles si, dans ces cellules, la mesure de la vitesse du vent peut être obtenue par d'autres moyens in situ, par exemple à l'aide de sondes.

L'invention permet en outre de déplacer les zones de visées, en ajustant l'altitude orbitale. La vitesse de déplacement de ces zones peut être de quelques jours à quelques semaines, en fonction des desiderata des utilisateurs; on peut donc procéder à des mesures en des lieux différents.

La position des satellites de la constellation sur l'orbite et les lignes de visées peuvent être déterminées comme suit. Pour assurer une répartition régulière des traces des satellites dans la deuxième zone, on utilise avantageusement la condition :

$$\frac{2\pi T_s}{nT}R < \frac{H}{\cos\gamma}\left|\mathrm{tg}\,\alpha_{i+1}\sin\varphi_{i+1} - \mathrm{tg}\,\alpha_i\sin\varphi_i\right| + \frac{T_s}{T}R\psi_{i,i+1} \le a + \frac{2\pi T_s}{nT}R \qquad [1]$$

pour i variant de 1 à n-1, avec n le nombre de satellites dans la constellation. Dans cette formule, $T_s$, R, H, $\alpha_i$, $\varphi_i$ et $\psi_{i,i+1}$ ont la signification mentionnée plus haut. T est la période de rotation de la terre, soit environ 86200s. $\gamma$ est l'angle entre la projection de la vitesse du satellite i sur la surface de la Terre lors du passage au-dessus de l'équateur et la vitesse de rotation de la Terre à l'équateur; pour l'exemple considéré d'une orbite polaire, on a

$$\mathrm{tg}\,\gamma \approx \frac{2\pi R}{T}\sqrt{\frac{R+H}{\mu}}$$

Dans cette formule, le paramètre a est un terme d'écart, typiquement de quelques centaines de km, par exemple inférieur à 500 km; plus a s'écarte de la valeur 0, moins les intersections des traces des trajectoires avec l'équateur seront équidistantes ; par suite, idéalement : a=0, c'est-à-dire :

$$\frac{H}{\cos\gamma}\left|\mathrm{tg}\,\alpha_{i+1}\sin\varphi_{i+1} - \mathrm{tg}\,\alpha_i\sin\varphi_i\right| + \frac{T_s}{T}R\psi_{i,i+1} = \frac{2\pi T_s}{nT}R \qquad [1']$$

Cette condition assure une répartition régulière des trajectoires dans la deuxième zone, autrement dit un bon balayage de la surface de la Terre dans la deuxième zone.

Pour assurer un regroupement des traces des satellites dans la première zone, on peut imposer la contrainte suivante:

$$\frac{T_s}{T}R\psi_{i,i+1} \le \frac{H}{\cos\gamma}\left|\mathrm{tg}\,\alpha_i\sin\varphi_i - \mathrm{tg}\,\alpha_{i+1}\sin\varphi_{i+1}\right| \le \frac{T_s}{T}R\psi_{i,i+1} + b \qquad [2]$$

où les différents paramètres ont la même signification, et où b est un terme d'écart, typiquement de quelques dizaines de km, inférieur à 200 km en général. Plus b s'écarte de la valeur 0, moins les projections des lignes de visée au sol sont proches les unes des autres ; par suite, idéalement : b=0, c'est-à-dire :

$$\frac{H}{\cos\gamma}\left|\mathrm{tg}\,\alpha_{i+1}\sin\varphi_{i+1} - \mathrm{tg}\,\alpha_i\sin\varphi_i\right| = \frac{T_s}{T}R\psi_{i,i+1} \qquad [2']$$

Cette condition assure un bon recouvrement des traces dans la première zone. On peut choisir des valeurs de b inférieures à 20 km, voire inférieures à 10 km comme dans les configurations à trois satellites données plus haut à titre d'exemple.

Dans le mode de réalisation préféré de l'invention, les paramètres a et b sont nuls. On choisit $\psi_{i,i+1}=\pi/n$, autrement dit un angle entre satellites de 90° pour une constellation de deux satellites et un angle entre satellites de 60° pour une constellation de trois satellites; dans ces conditions, dans le cas particulier simplifié où $\alpha_i=\alpha_{i+1}$ (=$\alpha$), compte tenu des ordres de grandeur des différents paramètres, on aboutit aux résultats suivants.

Pour une constellation de deux satellites, le respect des équations [1'] et [2'] impose que $\varphi_i$ et $\varphi_{i+1}$ soient de signe opposé ; si l'on suppose en outre (condition non restrictive) que $\varphi_1 =-\varphi_2$ (=$\varphi$, positif), on arrive à :

$$ \operatorname{tg}\alpha \, \sin\varphi = \frac{\pi}{4}\cos\gamma \, \frac{T_s R}{TH} $$

qui varie entre ≈0,92 pour H=350 km et ≈0,66 pour H=500 km.

Pour des valeurs de l'angle $\alpha$ de 45°, on trouve donc des valeurs possibles de l'angle $\varphi$ de l'ordre de 66° pour une altitude de 350 km et de l'ordre de 41° pour une altitude de 500 km.

Dans une constellation de trois satellites, les conditions ci-dessus s'écrivent pour a et b nuls

$$ \operatorname{tg}\alpha\left(\sin\varphi_2 - \sin\varphi_1\right) = \operatorname{tg}\alpha\left(\sin\varphi_3 - \sin\varphi_2\right) = \frac{\pi}{3}\cos\gamma \, \frac{T_s R}{TH} $$

cette quantité variant entre ≈1,22 pour H=350km et ≈0,88 pour H=500 km.

Une solution possible est, pour H=500km, $\varphi_2=0$, et $\varphi_1 =-\varphi_3$ (=$\varphi$, positif); pour une valeur de $\alpha$ de 30°, on obtient une valeur de $\varphi$ de l'ordre de 50°, et pour une valeur de $\alpha$ de 45°, on obtient une valeur de $\varphi$ de l'ordre de 62°. Dans le cas d'une configuration de trois satellites, les relations [1'] et [2'] ne peuvent être satisfaites que pour des valeurs d'altitude H vérifiant :

$$ \frac{H}{\sqrt{(R+H)^3}\,\cos\left(\operatorname{Arctg}\frac{2\pi}{R}\sqrt{\frac{R+H}{\mu}}\right)} > \frac{2\pi^2}{3}\frac{R}{T\sqrt{\mu}} $$

c'est-à-dire approximativement H > 435 km

Bien entendu, on peut trouver des solutions pour des valeurs d'altitude inférieures, notamment avec des valeurs de l'angle $\alpha$ différentes selon les satellites de la constellation, ou pour des valeurs des paramètres a et b non nuls.

Les formules qui précèdent sont données dans une approximation Terre plate. L'erreur induite par cette approximation est de l'ordre de quelques pourcents (pour H=500km et $\alpha$=45°, cette erreur est ~4%), de telle sorte que les formules restent opératoires.

Si l'on ne procède pas à cette approximation Terre plate, les formules précédentes [1], [1'], [2] et [2'] sont modifiées en remplaçant :

$$ H\operatorname{tg}\alpha \qquad \text{par} \qquad R\left[\operatorname{Arcsin}\left(\frac{R+H}{R}\sin\alpha\right) - \alpha\right] $$

[1] devient :

$$ \frac{2\pi T_s}{nT}R < U \le a + \frac{2\pi T_s}{nT}R $$

avec

$$U = \frac{R}{\cos\gamma} \left\| \left[ Arc\sin\left(\frac{R+H}{R}\sin\alpha_{i+1}\right) - \alpha_{i+1} \right] \sin\varphi_{i+1} - R \left[ Arc\sin\left(\frac{R+H}{R}\sin\alpha_i\right) - \alpha_i \right] \sin\varphi_i \right\| + \frac{T_s}{T} R\psi_{i,i+1}$$

pour i=1 à n-1 [$1_0$]

[1'] devient :

$$\frac{R}{\cos\gamma} \left\| \left[ Arc\sin\left(\frac{R+H}{R}\sin\alpha_{i+1}\right) - \alpha_{i+1} \right] \sin\varphi_{i+1} - \left[ Arc\sin\left(\frac{R+H}{R}\sin\alpha_i\right) - \alpha_i \right] \sin\varphi_i \right\| + \frac{T_s}{T} R\psi_{i,i+1}$$

$$= \frac{2\pi T_s}{nT} R$$

(formule [$I_0'$])

[2] devient :

$$\frac{T_s}{T} R\psi_{i,i+1} \le V \le \frac{T_s}{T} R\psi_{i,i+1} + b$$

avec

$$V = \frac{R}{\cos\gamma} \left\| \left[ Arc\sin\left(\frac{R+H}{R}\sin\alpha_i\right) - \alpha_i \right] \sin\varphi_i - \left[ Arc\sin\left(\frac{R+H}{R}\sin\alpha_{i+1}\right) - \alpha_{i+1} \right] \sin\varphi_{i+1} \right\|$$

pour i=1 à n-1 1 [$2_0$]

[2'] devient :

$$R \left\| \left[ Arc\sin\left(\frac{R+H}{R}\sin\alpha_{i+1}\right) - \alpha_{i+1} \right] \sin\varphi_{i+1} - \left[ Arc\sin\left(\frac{R+H}{R}\sin\alpha_i\right) - \alpha_i \right] \sin\varphi_i \right\| = \frac{T_s}{T} R\psi_{i,i+1}$$

(formule [$2_0'$])

Pour 3 satellites, les relations [$1_0'$] et [$2_0'$] ne peuvent être satisfaites que pour H>418km si l'on considère la rotondité de la Terre (contre 435km si l'on considère la Terre plate). On notera que les résultats proposés dans la suite de la description en référence aux figures 3 à 18 sont obtenus dans une simulation prenant en compte la rotondité de la Terre.

On donne maintenant en référence aux figures 3 à 18 des exemples de modes de réalisation de l'invention. La figure 3 est une représentation schématique d'une constellation de deux satellites, dans un premier mode de réalisation de l'invention; elle montre les deux satellites dans le plan de l'orbite; celle-ci est une orbite polaire. Les satellites sont décalés de $\psi_{1,2}$ = 120° sur cette orbite. La figure 4 est une représentation schématique de l'angle de visée du premier satellite de la constellation de la figure 3; l'angle $\alpha$ vaut 45°, et le premier satellite vise sur le côté droit, i. e. avec un angle $\varphi_1$ de -90°. La figure 5 est une représentation schématique de l'angle de visée du deuxième satellite de la constellation de la figure 3; l'angle $\alpha$ vaut encore 45°, et l'angle $\varphi_2$ est nul. Dans cette configuration, les paramètres a et b valent respectivement 60 et 400 km.

La figure 6 est une représentation des intersections des lignes de visée avec la surface du globe, pour la constellation de la figure 3; on a représenté par des carrés la trace du premier satellite, et par des croix la trace du second satellite. On distingue clairement sur la figure la première zone ainsi que la seconde zone, qui sont indiquées dans le bas de la figure.

Les figures 7 à 9 sont des représentations similaires à celles des figures 4 à 6 pour une autre constellation à deux satellites suivant l'invention; dans cette constellation, la position des deux satellites sur l'orbite est identique à celle de la figure 3. La figure 7 montre l'angle de visée du premier satellite, avec des angles $\alpha$ et $\varphi_1$ valant respectivement 45° et 0°. La figure 8 montre l'angle de visée du premier satellite, avec des angles $\alpha$ et $\phi_2$ valant respectivement 45° et -90°. La figure 9 montre la trace des satellites sur la surface de la Terre. Dans cette configuration, les paramètres a et b valent respectivement 60 et 400 km, comme dans la configuration précédente. Bien que ces valeurs ne soient pas nulles, les figures montrent que l'on obtient bien une répartition des points de mesure en deux zones, comme le propose l'invention.

Les figures 10 à 18 montrent des vues similaires, pour une configuration à trois satellites. La figure 10 montre les trois satellites dans le plan de l'orbite polaire. Les satellites sont décalés de $\psi_{1,2} = \psi_{2,3} = 60°$ sur cette orbite. La figure 11 est une représentation schématique de l'angle de visée du premier satellite de la constellation de la figure 10; l'angle $\alpha$ vaut 45°, et le premier satellite vise sur le côté arrière gauche, avec un angle $\varphi_1$ de 120°. La figure 12 est une représentation schématique de l'angle de visée du deuxième satellite de la constellation; l'angle $\alpha$ vaut encore 45°, et l'angle $\varphi_2$ est nul. La figure 13 est une représentation schématique de l'angle de visée du troisième satellite de la constellation; l'angle $\alpha$ vaut encore 45°, et l'angle $\varphi_3$ vaut -120°. La figure 14 montre les traces des trois satellites sur la surface de la Terre; de nouveau, les deux zones apparaissent clairement. Dans cette configuration, les paramètres a et b valent chacun 10 km.

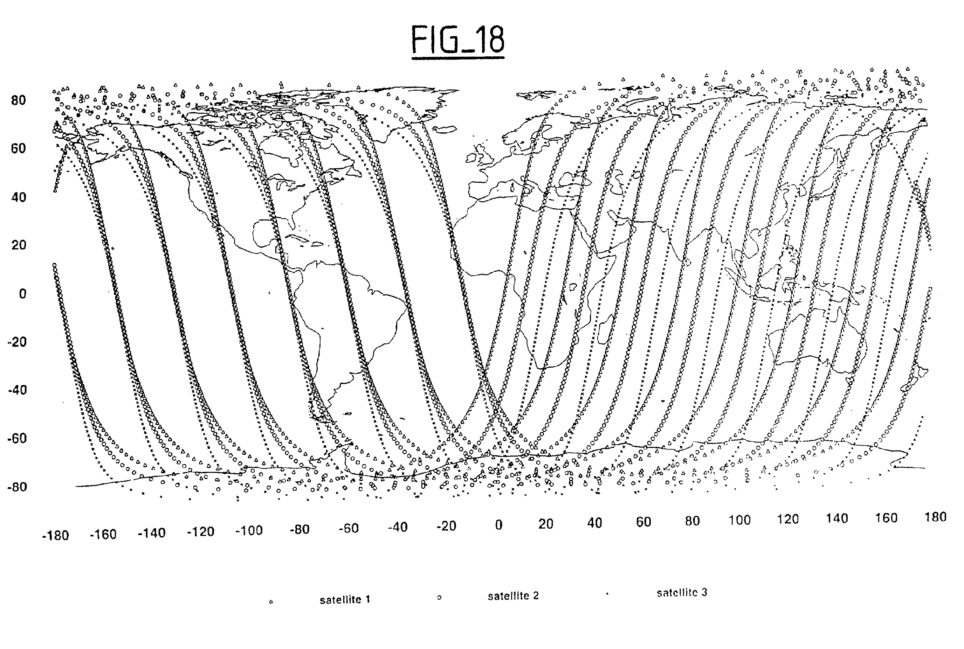

Les figures 15 à 18 sont similaires aux figures 10 à 14, pour une autre constellation à trois satellites. La constellation comprend comme celle des figures 10 à 14 trois satellites sur une orbite polaire; la position des trois satellites sur l'orbite est similaire à celle de la figure 10. Les figures 15 à 18 montrent les angles de visée des trois satellites; dans tous les cas, l'angle $\alpha$ vaut 45° et les angles $\varphi_1$, $\varphi_2$ et $\varphi_3$ valent respectivement -60°, 180° et 60°. La figure 18 montre les traces des satellites, avec les mêmes conventions que la figure 14. De nouveau, on reconnaît clairement les trois zones. Dans l'exemple, les paramètres a et b valent tous les deux 10 km.

Les différents exemples montrent que l'invention peut utilement être mise en oeuvre, même pour des valeurs non nulles des paramètres a et b.

Bien entendu, la présente invention n'est pas limitée aux exemples et modes de réalisation décrits et représentés, mais elle est susceptible de nombreuses variantes accessibles à l'homme de l'art. Les différentes conditions données plus haut peuvent avantageusement être combinées, mais on peut aussi n'utiliser que certaines d'entre elles; on pourrait simplement utiliser les conditions [1] ou [1'], sans utiliser les conditions [2] ou [2'], si l'objectif recherché est une répartition dans une zone, mais pas un regroupement dans l'autre zone.

**Revendications**

1. Une constellation d'une pluralité de satellites pour la mesure des vitesses de vents atmosphériques, chaque satellite présentant un lidar Doppler, **caractérisée en ce que** :

   • ladite pluralité de satellites sont répartis sur une même orbite non-géostationnaire
   • les satellites lidar de la constellation présentent des angles différents entre la projection sur la surface de la Terre de la ligne de visée et la projection sur la Terre de la vitesse du satellite ;
   • les traces sur la surface de la Terre des lignes de visées des satellites de la constellation sont sensiblement confondues dans une première zone de la surface de la Terre ;
   • et **en ce que** les traces sur la surface de la Terre des lignes de visées des satellites de la constellation sont sensiblement régulièrement réparties dans une deuxième zone de la surface de la Terre.

2. La constellation de la revendication 1, **caractérisée en ce que** la ligne de visée du lidar Doppler d'un satellite est fixe.

3. La constellation de la revendication 1 ou 2, **caractérisée en ce que** l'orbite est une orbite polaire ou quasi-polaire.

4. La constellation de la revendication 1, 2 ou 3, **caractérisée en ce que** l'altitude orbitale est comprise entre 350 et 500 km.

5. La constellation de la revendication 4, **caractérisée en ce qu'**elle présente trois satellites, et **en ce que** l'altitude orbitale est comprise entre 400 et 500 km.

6. La constellation de l'une des revendications 1 à 5, **caractérisée en ce que** l'angle de visée du tir d'un satellite par rapport au nadir est compris entre 30 et 50° et est de préférence voisin de 45°.

**7.** La constellation de la revendication 6 , **caractérisée en ce qu'**elle présente deux satellites, et **en ce que** la différence entre lesdits angles est comprise entre 75 et 105° et est de préférence voisine de 90°.

**8.** La constellation de la revendication 7 , **caractérisée en ce qu'**elle présente trois satellites, et **en ce que** la différence entre lesdits angles est comprise entre 90 et 150° et est de préférence voisine de 120°.

**9.** La constellation de l'une des revendications 1 à 8, **caractérisée en ce qu'**elle vérifie :

$$\frac{2\pi T_s}{nT}R < \frac{H}{\cos\gamma}\left|tg\alpha_{i+1}\sin\varphi_{i+1} - tg\alpha_i\sin\varphi_i\right| + \frac{T_s}{T}R\psi_{i,i+1} \le a + \frac{2\pi T_s}{nT}R$$

où n est le nombre de satellites dans la constellation, T la période de rotation de la Terre, $T_s$ la période orbitale, R le rayon de la Terre, H l'altitude orbitale, $\gamma$ est l'angle entre la projection de la vitesse du satellite i sur la surface de la Terre lors du passage au-dessus de l'équateur et la vitesse de rotation de la Terre à l'équateur, $\alpha_i$ l'angle entre la ligne de visée pour le satellite i et le nadir, $\varphi_i$ l'angle entre la projection sur la Terre de la ligne de visée du satellite i et la projection sur la Terre de la vitesse de ce satellite, $\psi_{i,i+1}$ l'angle mesuré dans le plan de l'orbite entre les satellites i et i+1, a est un paramètre homogène à une distance et inférieur à 500 km.

**10.** La constellation de la revendication 9 , **caractérisée en ce que** le paramètre a présente une valeur inférieure à 100 km, de préférence inférieure à 50 km.

**11.** La constellation de l'une des revendications 1 à 10, **caractérisée en ce que** l'angle entre deux satellites de la constellation, dans le plan de l'orbite, vérifie:

$$\frac{T_s}{T}R\psi_{i,i+1} \le \frac{H}{\cos\gamma}\left|tg\alpha_i\sin\varphi_i - tg\alpha_{i+1}\sin\varphi_{i+1}\right| \le \frac{T_s}{T}R\psi_{i,i+1} + b$$

où T la période de rotation de la Terre, $T_s$ la période orbitale, H l'altitude orbitale, $\gamma$ est l'angle entre la projection de la vitesse du satellite i sur la surface de la Terre lors du passage au-dessus de l'équateur et la vitesse de rotation de la Terre à l'équateur, $\alpha_i$ l'angle entre la ligne de visée pour le satellite i et le nadir, $\varphi_i$ l'angle entre la projection sur la Terre de la ligne de visée du satellite i et la projection sur la Terre de la vitesse de ce satellite, $\psi_{i,i+1}$ l'angle mesuré dans le plan de l'orbite entre les satellites i et i+1, b est un paramètre homogène à une distance et inférieur à 200 km.

**12.** La constellation de la revendication 11, **caractérisée en ce que** le paramètre b présente une valeur inférieure à 20 km, de préférence inférieure à 10 km.

**Claims**

**1.** A constellation consisting of a plurality of satellites for measuring atmospheric wind speeds, each satellite carrying a Doppler lidar, **characterised in that**:

   • said plurality of satellites are distributed over the same non-geosynchronous orbit;
   • the lidar satellites of the constellation have different angles between the projection of the sight axis on the surface of the earth and the projection of the speed of the satellite on the earth;
   • the tracks on the surface of the earth of the sight axes of the satellites of the constellation are substantially coincident in a first area of the surface of the earth;
   • and **in that** the tracks on the surface of the earth of the sight axes of the satellites of the constellation are substantially regularly distributed in a second area of the surface of the earth.

**2.** Constellation according to claim 1, **characterised in that** the sight axis of the Doppler lidar of a satellite is fixed,

**3.** Constellation according to claim 1 or 2, **characterised in that** the orbit is a polar or quasi-polar orbit.

**4.** Constellation according to claim 1, 2 or 3, **characterised in that** the orbital altitude is from 350 km to 500 km.

**5.** Constellation according to claim 4, **characterised in that** it includes three satellites and **in that** the orbital altitude is from 400 km to 500 km.

**6.** Constellation according to any of claims 1 to 5, **characterised in that** the sight angle of one satellite relative to the nadir is from 30° to 50° and is preferably about 45°.

**7.** Constellation according to claim 6, **characterised in that** it includes two satellites and **in that** the difference between said angles is from 75° to 105° and is preferably about 90°.

**8.** Constellation according to claim 7, **characterised in that** it includes three satellites and **in that** the difference between said angles is from 90° to 150° and is preferably about 120°.

**9.** Constellation according to any of claims 1 to 8, **characterised in that** it satisfies the conditions:

$$\frac{2\pi T_s}{nT}R < \frac{H}{\cos\gamma}\left|\tan\alpha_{i+1}\sin\varphi_{i+1} - \tan\alpha_i\sin\varphi_i\right| + \frac{T_s}{T}R\psi_{i,i+1} \le a + \frac{2\pi T_s}{nT}R$$

in which n is the number of satellites in the constellation, T is the period of rotation of the earth, $T_s$ is the orbital period, R is the radius of the earth, H is the orbital altitude, $\gamma$ is the angle between the projection of the speed of satellite i on the surface of the earth on passing over the equator and the rotation speed of the earth at the equator, $\alpha_i$ is the angle between the sight axis of satellite i and the nadir, $\varphi_i$ is the angle the projection on the earth of the sight axis of satellite i and the projection on the earth of the speed of that satellite $\psi_{i,i+1}$ is the angle measured in the plane of the orbit between the satellites i and i+1, and a is a parameter analogous to a distance and is less than 500 km.

**10.** Constellation according to claim 9, **characterised in that** the parameter a has a value less than 100 km and preferably less than 50 km.

**11.** Constellation according 10 any of claims 1 to 10, **characterised in that** the angle between two satellites of the constellation in the plane of the orbit satisfies the condition:

$$\frac{T_s}{T}R\psi_{i,i+1} \le \frac{H}{\cos\gamma}\left|\tan\alpha_i\sin\varphi_i - \tan\alpha_{i+1}\sin\varphi_{i+1}\right| \le \frac{T_s}{T}R\psi_{i,i+1} + b$$

in which T is the rotation period of the earth, $T_s$ is the orbital period, H is the orbital altitude, $\gamma$ is the angle between the projection of the speed of satellite i on the surface of the earth on parsing over the equator and the rotation speed of the earth at the equator, $\alpha_i$ is the angle between the sight axis of satellite i and the nadir, $\varphi_i$ is the angle between the projection of the sight axis of satellite i on the earth and the projection of the speed of said satellite on the earth, $\psi_{i,j+1}$ is the angle measured in the plane of the orbit between satellites i and i+1, and b is a parameter analogous to a distance and is less than 200 km.

**12.** Constellation according to claim 11, **characterised in that** the parameter b has a value less than 30 km and preferably less than 10 kin.

**Patentansprüche**

**1.** Eine Konstellation aus einer Vielzahl von Satelliten zur Messung der atmosphärischen Windgeschwnidigkeit, wobei jeder Satellit einen Doppler-Lidar aufweist, **dadurch gekennzeichnet, dass**

• die genannte Vielzahl von Satelliten auf der gleichen, nicht geostationären Umlaufbahn verteilt ist;
• die Lidar-Satelliten der Konstellation verschiedene Winkel der Projektion der Basislinie auf die Erdoberfläche und der Projektion der Satelliten-Geschwindigkeit auf die Erdoberfläche aufweisen;
• die Bahnen der Basislinien der Satelliten in der Konstellation auf der Erdoberfläche in einer ersten Zone der Erdoberfläche in etwa ineinander übergehen:
• sowie dadurch, dass die Bahnen der der Satelliten in der Konstellation auf der Erdoberfläche in einer zweiten Zone der Erdoberfläche in etwa regelmäßig verteilt sind.

2. Die Konstellation aus Anspruch 1, **dadurch gekennzeichnet, dass** die Basislinie des Doppler-Lidars eines Satelliten unveränderlich ist.

3. Die Konstellation aus Anspruch 1 oder 2, **dadurch gekennzeichnet, dass** es sich bei der Umlaufbahn um eine polare oder eine annähernd polare Umlaufbahn handelt.

4. Die Konstellation aus Anspruch 1, 2 oder 3, **dadurch gekennzeichnet, dass** die Orbitalhöhe zwischen 350 und 500 km beträgt.

5. Die Konstellation aus Anspruch 4, **dadurch gekennzeichnet, dass** sie drei Satelliten aufweist, sowie dadurch, dass die Orbitalhöhe zwischen 400 und 500 km beträgt.

6. Die Konstellation aus einem der Ansprüche 1 bis 5, **dadurch gekennzeichnet, dass** der Visierwinkel des Laserstrahls in Bezug auf den Fußpunkt zwischen 30 und 50°, vorzugsweise um 45° beträgt.

7. Die Konstellation aus Anspruch 6, **dadurch gekennzeichnet, dass** sie zwei Satelliten aufweist, sowie dadurch, dass die Differenz zwischen den genannten Winkeln zwischen 75 und 105°, vorzugsweise um 90° beträgt.

8. Die Konstellation aus Anspruch 7, **dadurch gekennzeichnet, dass** sie drei Satelliten ausweist, sowie dadurch, dass die Differenz zwischen den genannten Winkeln zwischen 90 und 150°, vorzugsweise um 120° beträgt.

9. Die Konstellation aus einem der Ansprüche 1 bis 8, **dadurch gekennzeichnet, dass** sie Folgendes überprüft:

$$\frac{2\pi T_s}{nT}R < \frac{H}{\cos\gamma}\left|tg\alpha_{i+1}\sin\varphi_{i+1} - tg\alpha_i\sin\varphi_i\right| + \frac{T_s}{T}R\psi_{i,i+1} \leq a + \frac{2\pi T_s}{nT}R$$

wobei n die Anzahl an Satelliten in der Konstellation ist, T die Rotationsperiode der Erde, $T_s$ die Orbitalperiode; R der Radius der Erde, H die Orbitalhöhe, $\gamma$ der Winkel zwischen der Projektion der Geschwindigkeit des Satelliten i auf die Erdoberfläche bei der Überquerung des Äquators und der Rotationsgeschwindigkeit der Erde am Äquator, $\alpha_2$ der Winkel zwischen der Basislinie für den Satelliten i und dem Fußpunkt, $\phi_i$ der Winkel zwischen der Projektion der Basislinie des Satelliten i auf die Erde und der Projektion der Geschwindigkeit dieses Satelliten auf die Erde, $\psi_{i,i+1}$ der gemessene Winkel in der Ebene der Umlaufbahn zwischen den Satelliten i und i+1 und a ein einheitlicher Parameter für den Abstand, der unter 500 km beträgt.

10. Die Konstellation aus Anspruch 9, **dadurch gekennzeichnet, dass** der Parameter a einen Wert unter 100 km, vorzugsweise unter 50 km aufweist.

11. Die Konstellation aus einem der Ansprüche 1 bis 10, **dadurch gekennzeichnet, dass** der Winkel zwischen den beiden Satelliten der Konstellation in der Ebene der Umlaufbahn Folgendes überprüft;

$$\frac{T_s}{T}R\psi_{i,i+1} \leq \frac{H}{\cos\gamma}\left|tg\alpha_i\sin\varphi_i - tg\alpha_{i+1}\sin\varphi_{i+1}\right| \leq \frac{T_s}{T}R\psi_{i,i+1} + b$$

wobei T die Rotationsperiode der Erde ist, $T_s$ die Orbitalperiode, H die Orbitalhöhe, $\gamma$ der Winkel zwischen der Projektion der Geschwindigkeit des Satelliten i auf die Erdoberfläche bei der Überquerung des Äquators und der Rotationsgeschwindigkeit der Erde am Äquator, $\alpha_i$ der Winkel zwischen der Basislinie für den Satelliten i und dem Fußpunkt, $\phi_i$ der Winkel zwischen der Projektion der Basislinie des Satelliten i auf die Erde und der Projektion der Geschwindigkeit dieses Satelliten auf die Erde, $\psi_{i, i+1}$ der gemessene Winkel in der Ebene der Umlaufbahn zwischen den Satelliten i und i+1. und b ein einheitlicher Parameter für den Abstand, der unter 200 km beträgt.

12. Die Konstellation aus Anspruch 11, **dadurch gekennzeichnet, dass** der Parameter b einen Wert unter 20 km, vorzugsweise unter 10 km aufweist.

■ Satellite

$\varphi_1 > 0$

$\varphi_i < 0$

**FIG_1**

Satellite i

Satellite i+1

$\Psi_{i,i+1}$

Terre

**FIG_2**

120°

1

2

**FIG_3**

2

$\alpha$

$\varphi_2 = 0$

X

**FIG_5**

1

$\alpha$

X

$\varphi_1$

**FIG_4**

2

45°

$\alpha$

X

$\varphi_2$

**FIG_8**

1

$\alpha$

X

$\varphi_1 = 0$

**FIG_7**

FIG_10

FIG_11

FIG_12

FIG_13

FIG_15

FIG_17

FIG_16

FIG_6

# FIG_9

80

60

40

20

0

-20

-40

-60

-80

-180  -160  -140  -120  -100  -80  -60  -40  -20  0  20  40  60  80  100  120  140  160  180

□  satellite 1        ·  satellite 2

EP 1 178 334 B1

FIG_14

satellite 1   satellite 2   satellite 3

# FIG_18

satellite 1    satellite 2    satellite 3

EP 1 178 334 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5367371 A
- US 5872621 A
- JP 10019683 A
- US 4463357 A
- US 5428358 A
- US 5675081 A